(19) Europäisches Patentamt
European Patent Office
Office européen des brevets

(11) **EP 3 072 081 B1**

(12) **FASCICULE DE BREVET EUROPEEN**

(45) Date de publication et mention
de la délivrance du brevet:
**10.10.2018 Bulletin 2018/41**

(51) Int Cl.:
***G06K 9/00*** (2006.01)

(21) Numéro de dépôt: **14799454.5**

(22) Date de dépôt: **17.11.2014**

(86) Numéro de dépôt international:
**PCT/EP2014/074804**

(87) Numéro de publication internationale:
**WO 2015/075005 (28.05.2015 Gazette 2015/21)**

(54) **DETERMINATION DE LA CARTE DE PROFONDEUR IMAGE D'UNE SCENE**

BESTIMMUNG DER BILDTIEFENKARTE EINER SZENE

DETERMINATION OF THE IMAGE DEPTH MAP OF A SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2013 FR 1361340**

(43) Date de publication de la demande:
**28.09.2016 Bulletin 2016/39**

(73) Titulaires:
• **Commissariat à l'Énergie Atomique et aux Énergies Alternatives**
**75015 Paris (FR)**
• **Centre National de la Recherche Scientifique**
**75016 Paris (FR)**

(72) Inventeurs:
• **DIAS, Jérôme**
**69100 Villeurbanne (FR)**
• **ALLEYSSON, David**
**38430 Moirans (FR)**
• **GETIN, Stéphane**
**38100 Grenoble (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
• **Jérôme Dias ET AL: "Estimation de la profondeur par analyse de netteté", , 4 octobre 2010 (2010-10-04), XP055127127, Extrait de l'Internet: URL:http://www.pole-ora.com/pages/projets/ Journee3D/PoleORA_J3D_14102010_Poster_Di as .pdf [extrait le 2014-07-07]**
• **Pauline Trouvé: "Conception conjointe optique/traitement pour un imageur compact à capacité 3D", Thèse de Doctorat, 10 décembre 2012 (2012-12-10), pages 1-241, XP055126368, Palaiseau, France Extrait de l'Internet: URL:http://tel.archives-ouvertes.fr/docs/0 0/79/73/82/PDF/Trouve_2012.pdf [extrait le 2014-07-02]**
• **FERREOL SOULEZ ET AL: "Joint deconvolution and demosaicing", IMAGE PROCESSING (ICIP), 2009 16TH IEEE INTERNATIONAL CONFERENCE ON, IEEE, PISCATAWAY, NJ, USA, 7 novembre 2009 (2009-11-07), pages 145-148, XP031628815, ISBN: 978-1-4244-5653-6**
• **AYAN CHAKRABARTI ET AL: "Depth and Deblurring from a Spectrally-Varying Depth-of-Field", 7 octobre 2012 (2012-10-07), COMPUTER VISION ECCV 2012, SPRINGER BERLIN HEIDELBERG, BERLIN, HEIDELBERG, PAGE(S) 648 - 661, XP047019055, ISBN: 978-3-642-33714-7 le document en entier**
• **OLIVER COSSAIRT ET AL: "Spectral Focal Sweep: Extended depth of field from chromatic aberrations", COMPUTATIONAL PHOTOGRAPHY (ICCP), 2010 IEEE INTERNATIONAL CONFERENCE ON, IEEE, PISCATAWAY, NJ, USA, 29 mars 2010 (2010-03-29), pages 1-8, XP031763031, ISBN: 978-1-4244-7022-8**

• Benjamin Milgrom ET AL: "Novel approach for extending the depth of field of Barcode decoders by using RGB channels of information", Optics Express, 27 octobre 2010 (2010-10-27), pages 17027-17039, XP055126443, DOI: http://dx.doi.org/10.1364/OE.18.017027 Extrait de l'Internet: URL:http://www.opticsinfobase.org/oe/abstract.cfm?URI=oe-18-16-17027 [extrait le 2014-07-02]

**Description**

## DOMAINE TECHNIQUE

La présente invention concerne principalement la détermination d'une carte de profondeur image d'une scène.

La carte de profondeur image trouve de nombreuses applications parmi lesquelles on peut citer l'analyse dimensionnelle d'un objet de la scène ou la segmentation d'éléments de la scène.

L'invention concerne aussi la détermination de l'image avec extension de profondeur de champ de la scène.

Les domaines techniques concernés par l'invention sont eux aussi nombreux : interaction homme-machine (IHM), réalité augmentée (RA), microscopie, industrie du divertissement, automobile, domotique, contrôle dimensionnel, sécurité, vidéosurveillance en sont des exemples.

## ÉTAT DE LA TECHNIQUE ANTÉRIEURE

Il existe deux catégories d'imageurs 3D, les systèmes passifs, qui ne nécessitent pas de projection lumineuse sur la scène pour en déterminer la profondeur, et les systèmes actifs. Nous nous intéressons dans la suite seulement aux systèmes passifs.

Le document WO 2009/019362 concerne un dispositif optique muni d'un dispositif d'accroissement de sa profondeur de champ.

Le système optique présente un chromatisme longitudinal non corrigé. Les images couleur obtenues sont dégradées par le chromatisme longitudinal. Un tel dispositif optique focalise les composantes bleue, verte et rouge de ces images couleur, pour des objets respectivement « proches », « intermédiaires » et « lointains ». En réalisant une inversion de chromatisme sur ces images, la composante nette est utilisée pour recomposer les autres composantes floues. Les images couleur reconstituées ont ainsi une profondeur de champ supérieure à celle qui aurait été acquise avec un système optique équivalent et pour lequel le chromatisme longitudinal est corrigé.

Cette méthode ne considère que des images composées de trois canaux rouge, vert et bleu et ne gère par conséquent que des objets à trois profondeurs « proche », « intermédiaire » et « lointaine ».

Une méthode pour déterminer la carte de profondeur et l'image avec extension de profondeur de champ d'une scène est décrite dans le document intitulé « Coded aperture pairs for depth from defocus and defocus deblurring » de Zhou, Lin et Nayar, paru en 2011 dans « International Journal on Computer Vision ».

Cette méthode fait partie des techniques d'estimation de la profondeur à partir du flou, dite DFD (d'après l'anglais Depth From Defocus). Elle utilise deux prises de vue d'une même scène, avec des ouvertures, dites codées, différentes.

La carte de profondeur est obtenue par analyse de la variation de flou entre les deux images prises et minimisation d'un critère de coût en chaque point de l'image. Une image avec extension de profondeur de champ de la scène est ensuite estimée à partir de la carte de profondeur.

La thèse "Conception conjointe optique/traitement pour un imageur compact à capacité 3D" de Pauline Trouvé divulgue l'étude et la conception d'un imageur monovoie passif capable de produire une carte de profondeur de la scène observée en expoitant le concept de Depth from Defocus (DFD) en utilisant soit une pupille codée ou soit optique avec une aberration chromatique longitudinale non corrigée.

## EXPOSÉ DE L'INVENTION

L'invention vise à résoudre les problèmes de la technique antérieure en fournissant un procédé d'estimation de la carte de profondeur image d'une scène, caractérisé en ce qu'il comporte les étapes de :

- fourniture d'une image dont la focalisation dépend de la profondeur et de la longueur d'onde des points objets considérés de la scène, par un système optique chromatique longitudinal,
- détermination d'un ensemble d'images spectrales à partir de l'image fournie par le système optique chromatique longitudinal,
- déconvolution des images spectrales pour fournir des images spectrales estimées avec extension de profondeur de champ, et
- analyse d'un critère de coût dépendant des images spectrales estimées avec extension de profondeur de champ pour fournir une carte de profondeur estimée.

Grâce à l'invention, il est possible de construire la carte de profondeur image d'une scène, à partir d'une unique prise de vue, avec un système monocapteur passif.

Ce mode de réalisation permet un fonctionnement en temps réel.

L'étape de détermination d'un ensemble d'images spectrales comporte les étapes de :

- réception de l'image formée par le système optique chromatique longitudinal et formation d'une image mosaïque, par un capteur d'images équipé d'une pluralité de filtres spectraux,
- démosaïçage de l'image mosaïque pour fournir un ensemble d'images filtrées,
- estimation spectrale pour recevoir l'ensemble d'images filtrées et fournir l'ensemble d'images spectrales.

Selon une caractéristique préférée, l'étape d'analyse d'un critère de coût comporte :

- la formation d'une image mosaïque recomposée à partir des images spectrales estimées avec extension de profondeur de champ de la scène,
- l'estimation de la profondeur en chaque point de l'image en minimisant un critère de coût dépendant d'une différence quadratique point à point entre l'image mosaïque formée et l'image mosaïque recomposée à partir d'images spectrales estimées avec extension de profondeur de champ de la scène, pour des profondeurs d'un domaine prédéterminé de profondeurs.

Selon une caractéristique préférée, le procédé comporte en outre une étape d'estimation d'un ensemble d'images spectrales avec extension de profondeur de champ de la scène pour la carte de profondeur estimée fournie à l'étape d'analyse.

Selon une caractéristique préférée, l'estimation de l'ensemble d'images spectrales avec extension de profondeur de champ de la scène comporte la sélection, par itération sur la profondeur, de valeurs d'images spectrales avec extension de profondeur de champ fournies à l'étape de déconvolution pour lesquelles la profondeur considérée correspond à la carte de profondeur estimée fournie à l'étape d'analyse.

Dans un mode de réalisation de l'invention, l'étape d'estimation spectrale et l'étape de déconvolution des images spectrales sont combinés en une seule étape.

Dans un autre mode de réalisation de l'invention, l'étape de démosaïçage, l'étape d'estimation spectrale et l'étape de déconvolution des images spectrales sont combinées en une seule étape et cette étape utilise des images issues d'une base de données d'images pour calculer une matrice de passage entre l'espace de l'image mosaïque et l'espace des images spectrales.

L'invention concerne aussi un dispositif d'estimation de la carte de profondeur image d'une scène, caractérisé en ce qu'il comporte :

- Un système optique chromatique longitudinal pour fournir une image dont la focalisation dépend de la profondeur et de la longueur d'onde des points objets considérés de la scène,
- Un capteur d'images spectrales pour recevoir l'image fournie par le système optique chromatique longitudinal et pour fournir un ensemble d'images spectrales,
- Un module de déconvolution des images spectrales pour fournir des images spectrales estimées avec extension de profondeur de champ, et
- Un module d'analyse d'un critère de coût dépendant des images spectrales estimées avec extension de profondeur de champ pour fournir une carte de profondeur estimée.

Le dispositif selon l'invention présente des avantages analogues à ceux précédemment mentionnés.

Le capteur d'images spectrales comporte :

- Un capteur d'images équipé d'une pluralité de filtres spectraux, pour recevoir l'image fournie par le système optique chromatique longitudinal et pour fournir une image mosaïque,
- Un module de démosaïçage pour recevoir l'image mosaïque et pour fournir un ensemble d'images filtrées,
- Un module d'estimation spectrale pour recevoir l'ensemble d'images filtrées et pour fournir l'ensemble d'images spectrales.

Selon une caractéristique préférée, le module d'analyse d'un critère de coût comporte :

- Des moyens de formation d'une image mosaïque recomposée à partir des images spectrales estimées avec extension de profondeur de champ de la scène,
- Des moyens d'estimation de la profondeur en chaque point de l'image adaptés à minimiser un critère de coût dépendant d'une différence quadratique point à point entre l'image mosaïque formée et l'image mosaïque recomposée à partir d'images spectrales estimées avec extension de profondeur de champ de la scène, pour des profondeurs d'un domaine prédéterminé de profondeurs.

Selon une caractéristique préférée, le dispositif comporte en outre un module d'estimation d'un ensemble d'images spectrales avec extension de profondeur de champ de la scène pour la carte de profondeur estimée fournie par le module d'analyse.

Selon une caractéristique préférée, le module d'estimation de l'ensemble d'images spectrales avec extension de profondeur de champ de la scène est adapté pour sélectionner, par itération sur la profondeur, des valeurs d'images spectrales avec extension de profondeur de champ fournies le module de déconvolution pour lesquelles la profondeur considérée correspond à la carte de profondeur estimée fournie par le module d'analyse.

Selon une caractéristique préférée, le module d'estimation spectrale et le module de déconvolution des images spectrales sont combinés en un seul module.

Selon une autre caractéristique préférée, le module de démosaïçage, le module d'estimation spectrale et le module de déconvolution des images spectrales sont combinés en un seul module qui est adapté à utiliser des images issues d'une base d'images pour calculer une matrice de passage entre l'espace de l'image mosaïque et l'espace des images spectrales.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en oeuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

## BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :

- La figure 1 représente un dispositif d'estimation de la carte de profondeur image d'une scène selon la présente invention,
- La figure 2 représente un organigramme de fonctionnement du dispositif selon la présente invention,
- La figure 3 représente un organigramme de fonctionnement d'un capteur d'images spectrales inclus dans le dispositif selon la présente invention,
- La figure 4 représente le calcul d'un filtre utilisé dans un module de démosaïçage du dispositif selon la présente invention,
- La figure 5 représente le calcul d'une matrice de passage entre l'espace de l'image mosaïque et l'espace des images spectrales.

## EXPOSÉ DÉTAILLÉ DE MODES DE RÉALISATION PARTICULIERS

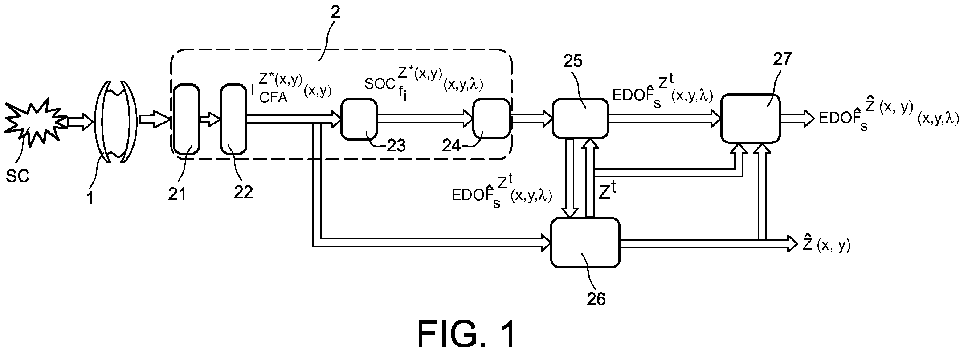

Selon un mode préféré de réalisation décrit en référence à la **figure 1,** un dispositif d'estimation de la carte de profondeur image d'une scène selon la présente invention comporte un système optique chromatique longitudinal 1.

Un tel système présente la particularité de conserver l'aberration chromatique longitudinale et de minimiser les autres aberrations.

L'aberration chromatique longitudinale est due à la présence dans le système optique d'éléments optiques dont les matériaux ont des indices de réfraction qui dépendent de la longueur d'onde dans le vide du rayon qui les traverse. Ainsi la distance focale du système optique 1 dépend de la longueur d'onde qui le traverse. La distance focale augmente avec la longueur d'onde. La distance focale est plus grande pour le rouge que pour le bleu.

En d'autres termes, en considérant un point objet donné et son image à travers le système optique chromatique longitudinal, la distance de focalisation ainsi que le flou image dépendent de la profondeur et de la longueur d'onde dans le vide du point objet considéré. Le point objet donné a une signature spectrale en termes de focalisation d'image qui est spécifique aux propriétés fixes du système et à la distance du point objet par rapport au système optique.

Il est à noter que le système optique chromatique longitudinal ne présente pas d'aberration chromatique transversale ou latérale, donc pas de distorsion de perspective liée à la variation spectrale de la focale. La focale ne varie que longitudinalement en fonction de la longueur d'onde. Ainsi, un point objet donné correspond à un même point image, quelle que soit la longueur d'onde considérée.

Lorsque le système optique chromatique longitudinal 1 est utilisé pour prendre une image d'une scène SC, il effectue une modulation spectrale de l'image en fonction de la profondeur et de la longueur d'onde du point objet correspondant au point image considéré.

Le système optique chromatique longitudinal 1 a une sortie connectée à une entrée d'un capteur d'images spectrales 2 auquel il délivre le résultat de la modulation spectrale de l'image.

A partir de cette entrée, le capteur d'images spectrales 2 comporte un capteur d'images matriciel 21 sur lequel est disposée une matrice de filtres colorés 22. Les filtres colorés peuvent être des résines colorées, mais l'homme du métier pourra utiliser d'autres filtres connus, tels que des filtres interférentiels ou encore des filtres nanostructurés. La position spatiale et la réponse spectrale de chaque filtre coloré sont optimisées de manière à favoriser la reconstruction des images spectrales souhaitées. Le capteur d'images matriciel 21 et la matrice de filtres colorés 22 permettent d'estimer la composition spectrale de la scène en une seule prise de vue.

Le capteur d'images matriciel 21 et la matrice de filtres colorés 22 délivrent en sortie une image mosaïque $I_{CFA}^{Z^*(x,y)}(x,y)$.

Les images spectrales réelles de la scène, notées $EDOF_s(x,y,\lambda)$, sont les projections géométriques sur le plan du capteur 21 des rayons provenant de la scène considérée.

En considérant un système de coordonnées du capteur d'image 21, on peut exprimer mathématiquement l'image mosaïque $I_{CFA}^{Z^*(x,y)}(x,y)$ en fonction des images spectrales réelles de la scène observée, des caractéristiques du système optique chromatique longitudinal, des caractéristiques de la mosaïque de filtres colorés et d'un bruit additif, selon la formule :

$$I_{CFA}^{Z^*(x,y)}(x,y) = \sum_{i=1}^{Nf} m_i(x,y).\int_\lambda h_i(\lambda).PSF(x,y,Z^*(x,y),\lambda) \otimes_{(x,y)} .EDOF_s(x,y,\lambda).d\lambda + \eta(x,y)$$

Dans laquelle :

- (x,y) sont les coordonnées d'un point dans le repère associé au capteur d'image,
- $\lambda$ est la longueur d'onde,
- $Z^*(x,y)$ est la profondeur réelle correspondant au point de coordonnées (x,y),
- $EDOF_s$ sont les images spectrales réelles de la scène, et $EDOF_s(x,y,\lambda)$ est la valeur de l'image spectrale correspondant au point de coordonnées (x,y) pour la longueur d'onde $\lambda$,
- PSF est la réponse impulsionnelle du système optique chromatique longitudinal (d'après l'anglais Point Spread Function) et $PSF(x,y,Z^*(x,y),\lambda)$ est la valeur de cette réponse impulsionnelle au point de coordonnées (x,y), pour la profondeur réelle $Z^*(x,y)$ et pour la longueur d'onde $\lambda$,
- $h_i(\lambda)$ est la transmission spectrale du $i^{ème}$ filtre coloré, pour la longueur d'onde $\lambda$,
- $m_i(x,y)$ est la position spatiale du $i^{ème}$ filtre coloré,
- $\eta(x,y)$ est la valeur du bruit additif au point de coordonnées (x,y),
- $\otimes_{(x,y)}$ est l'opération de produit de convolution considérée au point de coordonnées (x,y),
- $N_f$ est le nombre de filtres colorés.

Les mêmes notations sont conservées dans toute la description.

La sortie de la matrice de filtres colorés 22 est connectée à une entrée d'un module de démosaïçage 23. La matrice de filtres colorés 22 délivre à ce dernier l'image mosaïque $I_{CFA}^{Z^*(x,y)}(x,y)$.

Le module de démosaïçage 23 estime Nf images filtrées par l'intermédiaire d'un filtre $D_M$ qui est appliqué à l'image mosaïque $I_{CFA}^{Z^*(x,y)}(x,y)$, où Nf est le nombre de filtres colorés de la matrice 22. Les images filtrées sont à la résolution de l'image mosaïque $I_{CFA}^{Z^*(x,y)}(x,y)$ dans le repère associé au capteur d'image.

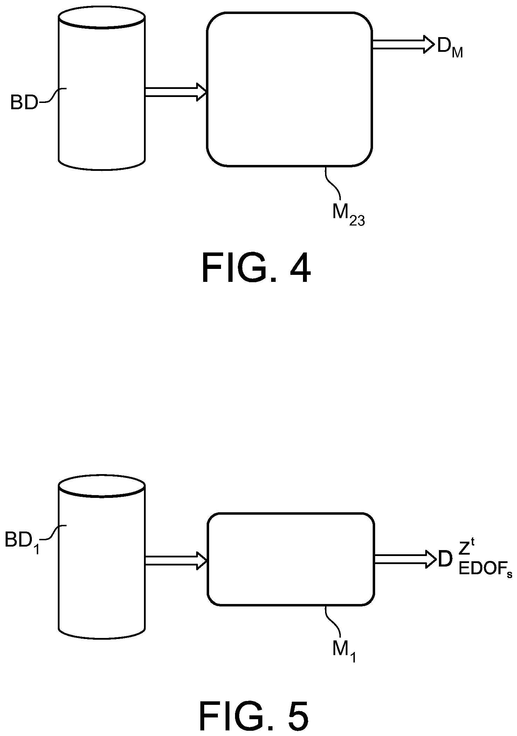

La **figure 4** représente le calcul du filtre $D_M$. Un module $M_{23}$ de calcul du filtre $D_M$ utilise des images spectrales délivrées par une base de données BD d'images spectrales pour reconstituer des images mosaïques et des images filtrées de référence, en fonction de propriétés spatiales et spectrales de la matrice de filtres considérées.

Le module de calcul détermine un filtre matriciel linéaire $D_M$ optimal au sens des moindres carrés. Le filtre matriciel linéaire $D_M$ optimal est déterminé par minimisation de la différence quadratique entre les images filtrées de référence et les images filtrées estimées en appliquant le filtre $D_M$ sur l'image mosaïque correspondante.

Le filtre matriciel linéaire $D_M$ optimal permet de passer de l'espace des images mosaïques à l'espace des images filtrées correspondantes.

Ainsi, le module de démosaïçage 23 permet de passer de l'image mosaïque $I_{CFA}^{Z^*(x,y)}(x,y)$ à des images filtrées. L'image filtrée $SOC_{f_i}^{Z^*(x,y)}(x,y)$ qui serait vue à travers le système optique chromatique longitudinal et le $i^{\text{ème}}$ filtre qui serait entièrement disposé sur le capteur d'image pour un objet à la profondeur réelle Z*(x,y) est donnée par la formule :

$$SOC_{f_i}^{Z^*(x,y)}(x,y) = \int_\lambda h_i(\lambda).PSF(x,y,Z^*(x,y),\lambda) \otimes_{(x,y)} .EDOF_s(x,y,\lambda).d\lambda + \eta(x,y)$$

Cette formule repose sur l'hypothèse que ces images filtrées sont données par la somme des images filtrées réelles (terme de gauche) et d'un terme de bruit (terme de droite). Dans ce cas les erreurs d'estimation liées au démosaïçage sont contenues dans ce terme de bruit additionnel. Ce terme n'est donc pas rigoureusement identique au terme de bruit dans l'équation de l'image mosaïque considérée (malgré une notation identique). Cependant il a été considéré que l'algorithme de démosaïçage utilisé induit dans chaque image filtrée un terme de bruit dont les propriétés statistiques sont identiques à celles du bruit de l'image mosaïque. C'est cette conservation des propriétés statistiques qui est ici mise à profit.

Le démosaïçage a ainsi pour résultat un ensemble de Nf images filtrées $SOC_{f_i}^{Z^*(x,y)}(x,y)$.

La sortie du module de démosaïçage 23 est connectée à une entrée d'un module d'estimation spectrale 24. Le module de démosaïçage 23 délivre les Nf images filtrées $SOC_{f_i}^{Z^*(x,y)}(x,y)$ au module 24.

Le module d'estimation spectrale 24 détermine Nλ images spectrales par l'intermédiaire d'un filtre d'inversion matricielle linéaire $F_S$ appliqué aux Nf images filtrées. Le fonctionnement du module 24 est détaillé dans la suite.

Chaque image spectrale se réfère à un échantillon de longueur d'onde. Le nombre Nλ d'images spectrales dépend de la gamme de longueurs d'ondes du système d'imagerie spectrale et de la taille d'un échantillon spectral.

Selon un mode de réalisation particulier, le nombre de filtres dans la mosaïque de filtres est égal au nombre d'images spectrales souhaitées. Dans ce cas, les images spectrales sont les images filtrées par le module de démosaïçage. En d'autres termes, le démosaïçage fournit directement les images spectrales et l'estimation spectrale n'est pas nécessaire.

La sortie du module d'estimation spectrale 24 est connectée à une entrée d'un module 25 de déconvolution. Le module d'estimation spectrale 24 délivre les Nλ images spectrales au module 25.

Le module 25 applique une déconvolution par l'intermédiaire d'un filtre d'inversion matricielle linéaire $C^{Z^t}$ aux Nλ images spectrales fournies par le module 24, pour une profondeur test $Z^t$ donnée par le module 26 décrit dans la suite.

Le module 25 de déconvolution détermine des images spectrales estimées avec extension de profondeur de champ $E\hat{DOF}_s^{Z^t}(x,y,\lambda),$ dans l'hypothèse où $Z^t$ est la profondeur réelle de la scène observée.

La sortie du module 25 de déconvolution est connectée à une entrée d'un module 26 d'estimation de la carte de profondeur réelle de la scène considérée. Le module 25 de déconvolution délivre les images spectrales estimées avec extension de profondeur de champ $E\hat{DOF}_s^{Z^t}(x,y,\lambda)$ qu'il a déterminées au module 26.

La sortie de la matrice de filtres colorés 22 est également connectée à une entrée du module 26. La matrice 22 délivre l'image mosaïque $I_{CFA}^{Z^*(x,y)}(x,y)$ au module 26.

Le module 26 détermine une estimation $\hat{Z}(x,y)$ de la carte de profondeur réelle $Z(x,y)$ de la scène considérée, à partir d'une minimisation d'un critère de coût calculé à partir de l'image mosaïque $I_{CFA}^{Z^*(x,y)}(x,y)$ fournie par la matrice 22 et des Nλ images spectrales estimées $EDO\hat{F}_s^{Z^t}(x,y,\lambda)$, fournies par le module 25.

Une sortie du module 26 est reliée à une entrée du module 25 de déconvolution pour lui fournir la profondeur test $Z^t$.

Le fonctionnement du module 26 est détaillé dans la suite.

La sortie du module 25 de déconvolution est connectée à une entrée d'un module 27 de sélection adaptative de pixels. Le module 25 de déconvolution délivre les Nλ images spectrales estimées $EDO\hat{F}_s^{Z^t}(x,y,\lambda)$ au module 27.

La sortie du module 26 d'estimation de la carte de profondeur réelle de la scène est connectée à une entrée du module 27 de sélection adaptative de pixels. Le module 26 délivre l'estimation $\hat{Z}(x,y)$ de la carte de profondeur réelle de la scène au module 27.

Le module 27 de sélection adaptative de pixels détermine Nλ images spectrales avec extension de profondeur de champ estimées $EDO\hat{F}_s^{\hat{Z}(x,y)}(x,y,\lambda)$, adaptées à la carte de profondeur estimée $\hat{Z}(x,y)$. Le fonctionnement du module 27 est détaillé dans la suite.

Dans un mode préféré de réalisation, le module 24 d'estimation spectrale et le module 25 de déconvolution des images spectrales sont combinés en un unique module.

Dans ce cas, on considère un domaine de profondeurs de test. Pour une profondeur donnée de test $Z^t$ appartenant à ce domaine, Nλ images spectrales estimées $EDO\hat{F}_s^{Z^t}(x,y,\lambda)$ sont déterminées. Cette estimation est réalisée à partir des Nf images filtrées $SOC_{f_i}^{Z^*(x,y)}(x,y)$, par exemple après transformée de Fourier de la formule mathématique donnant les images filtrées puis transposition sous forme matricielle linéaire de l'expression obtenue.

Ce mode de réalisation repose sur l'hypothèse d'une scène objet plane, perpendiculaire à l'axe optique du système utilisé, c'est à dire que la profondeur objet est indépendante des coordonnées (x,y).

On obtient ainsi l'écriture matricielle linéaire suivante :

$$G_i^{Z^*} = H_i^{Z^*}.S + N$$

Dans laquelle :

- $G_i^{Z^*}$ est l'écriture matricielle de la transformée de Fourier de l'image filtrée $SOC_{f_i}^{Z^*(x,y)}(x,y)$,

- S est l'écriture matricielle de la transformée de Fourier des images spectrales avec extension de profondeur de champ EDOF$_s$ que l'on souhaite estimer,

- $H_i^{Z^*}$ est l'écriture matricielle du produit $h_i$.OTF, avec OTF qui est la transformée de Fourier de la réponse impulsionnelle (PSF) du système optique considéré, dans l'hypothèse d'un objet à une profondeur considérée réelle $Z^*$,

- N est l'écriture matricielle de la transformée de Fourier du bruit additif η.

Une estimation aux moindres carrés de la matrice S est alors effectuée dans les modules 24 et 25 considérés comme un tout, selon la formule :

$$\hat{S}^{Z^t} = \left( \sum_{i=1}^{N_f} \left| H_i^{Z^t} \right| + C^2 \right)^{-1} . \sum_{j=1}^{N_f} \overline{H}_j^{Z^t}.G_j^{Z^*}$$

Dans laquelle :

- $Z^t$ est une profondeur donnée du domaine de test,

- $\hat{S}^{Z^t}$ est l'écriture matricielle de la transformée de Fourier des images spectrales estimées avec extension de profondeur de champ $EDO\hat{F}_s^{Z^t}(x,y,\lambda)$, dans l'hypothèse de la profondeur $Z^t$ de la scène considérée,
- i est l'indice du filtre $h_i$ et j est l'indice du filtre $h_j$,
- $\overline{H}_i^{Z^t}$ est la matrice conjuguée transposée de $H_i^{Z^t}$,
- C est un paramètre matriciel de régularisation qui permet de converger vers une meilleure estimation des images spectrales $EDOF_s$ considérées.

Les images spectrales estimées avec extension de profondeur de champ $EDO\hat{F}_s^{Z^t}(x,y,\lambda)$ sont ensuite obtenues en effectuant une transformée de Fourier inverse de la matrice $\hat{S}^{Z^t}$.

Dans le cas où les opérations des modules 24 et 25 sont effectuées simultanément, le terme matriciel, exprimé

$$\left( \sum_{i=1}^{N_f} \left| H_i^{Z^t} \right| + C^2 \right)^{-1} . \sum_{j=1}^{N_f} \overline{H}_j^{Z^t}$$

dans l'espace de Fourier, représente un filtre d'inversion matricielle linéaire équivalent au filtre $F_S.C^{Zt}$ (produit des filtres $F_S$ et $C^{Zt}$) pour estimer les images spectrales $EDO\hat{F}_s^{Z^t}(x,y,\lambda)$, à partir des images filtrées $SOC_{f_i}^{Z^*(x,y)}(x,y)$.

Une image mosaïque est recomposée dans le module 26 à partir des images spectrales estimées et pour la profondeur de test $Z^t$, selon la formule :

$$I_{CFA}^{Z^t}(x,y) = \sum_{i=1}^{Nf} m_i(x,y). \int_{\lambda} h_i(\lambda).TF^{-1}\left\{ \hat{S}^{Z^t}.H_i^{Z^t} \right\}$$

La différence quadratique pixel à pixel entre l'image mosaïque $I_{CFA}^{Z^*(x,y)}(x,y)$ déterminée par le module 22 et l'image mosaïque recomposée $I_{CFA}^{Z^t}(x,y)$ est minimisée. En d'autres termes, on recherche par itération la profondeur $Z^t$ en chaque point (x,y), dans le domaine de profondeurs de test, qui minimise un critère de coût $W^{Z^t}(x,y)$, calculé dans le module 26 :

$$W^{Z^t}(x,y) = \left\| I_{CFA}^{Z^*(x,y)}(x,y) - I_{CFA}^{Z^t}(x,y) \right\|^2$$

L'ensemble des valeurs de profondeur estimées pour toutes les positions (x,y) de l'image donne la carte de profondeur estimée $\hat{Z}(x,y)$.

Le module 27 détermine ensuite les $N\lambda$ images spectrales avec extension de profondeur de champ estimées $EDO\hat{F}_s^{\hat{Z}(x,y)}(x,y,\lambda)$ en ne sélectionnant, par itération sur la profondeur $Z^t$, que les valeurs d'images spectrales avec extension de profondeur de champ estimées $EDO\hat{F}_s^{Z^t(x,y)}(x,y,\lambda)$ pour lesquelles la profondeur $Z^t$ considérée correspond à la carte de profondeur estimée $\hat{Z}(x,y)$.

Dans un autre mode préféré de réalisation, le module 23 de démosaïçage, le module 24 d'estimation spectrale et le module 25 de déconvolution des images spectrales sont combinés en un seul module.

Ce mode de réalisation est basé sur le fait qu'il est possible de trouver une loi de passage de l'espace d'image mosaïque à un autre espace, ici l'espace des images spectrales avec extension de profondeur de champ, sous la forme d'une écriture matricielle linéaire.

Comme représenté à la **figure 5**, dans ce mode de réalisation, un module de calcul $M_1$ utilise des images issues d'une base de données d'images $BD_1$ pour calculer une matrice de passage $D_{EDOF_s}^{Z^t}$ entre l'espace de l'image mosaïque et l'espace des images spectrales avec extension de profondeur de champ, pour une profondeur test $Z^t$.

Ce mode de réalisation repose sur l'hypothèse que la scène est un plan dans l'espace objet perpendiculaire à l'axe optique du système.

La matrice de passage $D_{EDOF_s}^{Z^t}$ de l'image mosaïque à l'une des images $EDOF_s$ de l'espace des images spectrales avec extension de profondeur de champ est donnée par la formule :

$$D_{EDOF_s}^{Z^t} = EDOF_s . I_{CFA}^{Z^{t^T}} . \left( I_{CFA}^{Z^t} . I_{CFA}^{Z^{t^T}} + r0.Id \right)^{-1}$$

Dans laquelle :

- Id représente une matrice identité dont la taille est identique à celle de la matrice $I_{CFA}^{Z^t} . I_{CFA}^{Z^{t^T}}$,

- r0 représente un élément scalaire de régularisation de la matrice $D_{EDOF_s}^{Z^t}$ estimée,

- $EDOF_s$ est une matrice contenant les valeurs des images spectrales avec extension de profondeur de champ de la base de données d'images utilisée,

- $I_{CFA}^{Z^t}$ est une matrice contenant les valeurs de l'image mosaïque recomposée $I_{CFA}^{Z^t}(x,y)$ à partir de l'expression mathématique d'une image mosaïque, pour une profondeur test donnée $Z^t$,

- $I_{CFA}^{Z^t\ T}$ est la matrice transposée de la matrice $I_{CFA}^{Z^t}$.

La matrice de passage $D_{EDOF_s}^{Z^t}$ de l'espace image mosaïque à l'espace des images spectrales avec extension de profondeur de champ est donnée par la moyenne des matrices calculées avec chacune des images de la base d'images utilisée, pour une profondeur test donnée $Z^t$.

On calcule ainsi plusieurs matrices de passage $D_{EDOF_s}^{Z^t}$ respectivement pour plusieurs profondeurs $Z^t$ du domaine de profondeurs de test.

L'image spectrale estimée avec extension de profondeur de champ pour la profondeur $Z^t$ est obtenue par multiplication matricielle de la matrice $D_{EDOF_s}^{Z^t}$ avec une matrice $I_{CFA}^{Z^{*(x,y)}}$ formée à partir de l'image mosaïque réelle $I_{CFA}^{Z^{*(x,y)}}(x,y)$. L'opération matricielle est du type :

$$EDOF_s^{Z^t}(x,y,\lambda) = D_{EDOFs}^{Z^t} . I_{CFA}^{Z^t}$$

Comme dans le premier mode de réalisation, une image mosaïque est recomposée dans le module 26 à partir des images spectrales estimées et pour la profondeur de test $Z^t$, selon la formule :

$$I_{CFA}^{Z^t}(x,y) = \sum_{i=1}^{Nf} m_i(x,y) . \int_\lambda h_i(\lambda) . PSF(x,y,Z^t,\lambda) \otimes_{(x,y)} EDOF_s^{Z^t}(x,y,\lambda)$$

La différence quadratique pixel à pixel entre l'image mosaïque $I_{CFA}^{Z^*(x,y)}(x,y)$ déterminée par le module 22 et l'image mosaïque recomposée $I_{CFA}^{Z^t}(x,y)$ est minimisée. En d'autres termes, on recherche par itération la profondeur $Z^t$ en chaque point (x,y), appartenant au domaine des profondeurs de test, qui minimise un critère de coût $W^{Z^t}(x,y)$ calculé dans le module 26 :

$$W^{Z^t}(x,y) = \left\| I_{CFA}^{Z^*(x,y)}(x,y) - I_{CFA}^{Z^t}(x,y) \right\|^2$$

L'ensemble des valeurs de profondeur estimées à chaque position (x,y) de l'image donne la carte de profondeur estimée $\hat{Z}(x,y)$.

Enfin, dans le module 27, les Nλ images spectrales avec extension de profondeur de champ estimées $ED\hat{OF}_s^{\hat{Z}(x,y)}(x,y,\lambda)$ sont déterminées en ne sélectionnant, par itération sur la profondeur $Z^t$, que les valeurs d'images spectrales avec extension de profondeur de champ estimées $ED\hat{OF}_s^{Z^t}(x,y,\lambda)$ pour lesquelles la profondeur $Z^t$ considérée correspond à la carte de profondeur estimée $\hat{Z}(x,y)$.

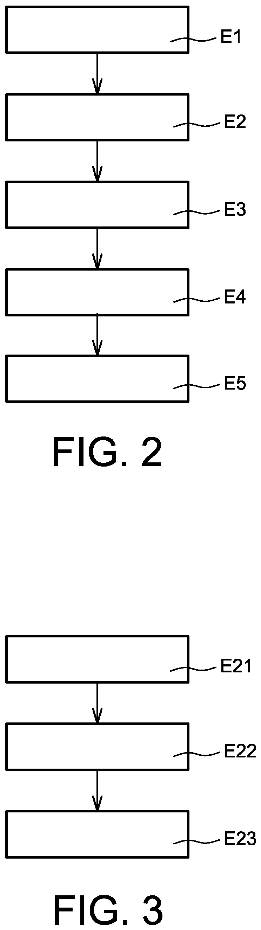

La **figure 2** représente un organigramme de fonctionnement du dispositif précédemment présenté, sous la forme d'un procédé comportant des étapes E1 à E5.

L'étape E1 est une étape de prise de vue d'une scène par le dispositif précédemment décrit. Une seule prise de vue est nécessaire dans le cadre de l'invention.

Le système optique chromatique longitudinal 1 délivre alors au capteur d'images spectrales 2 un flux spectral modulé en fonction de la distance et de la longueur d'onde pour chaque point de l'image.

A l'étape suivante E2, l'image fournie par le système optique chromatique longitudinal est reçue par le capteur d'images spectrales 2. Celui-ci fournit un ensemble de Nλ images spectrales. L'étape E2 est détaillée dans la suite.

A l'étape suivante E3, les Nλ images spectrales sont déconvoluées et utilisées pour estimer des images spectrales estimées avec extension de profondeur de champ $ED\hat{OF}_s^{Z^t}(x,y,\lambda)$, dans l'hypothèse où $Z^t$ est égale à la profondeur réelle de la scène observée.

L'étape suivante E4 est la détermination d'une estimation $\hat{Z}(x,y)$ de la carte de profondeur réelle $Z(x,y)$ de la scène considérée, à partir d'une minimisation d'un critère de coût calculé à partir de l'image mosaïque $I_{CFA}^{Z^*(x,y)}(x,y)$ fournie par la matrice 22 et des Nλ images spectrales estimées $ED\hat{OF}_s^{Z^t}(x,y,\lambda)$, fournies par le module 25.

L'étape suivante E5 est une sélection adaptative de pixels pour estimer un ensemble d'images spectrales avec extension de profondeur de champ de la scène, pour la carte de profondeur $\hat{Z}(x,y)$ qui a été estimée à l'étape E4.

La **figure 3** représente le détail de l'étape E2, sous la forme de sous-étapes E21 à E23.

A l'étape E21, l'image fournie par le système optique chromatique longitudinal 1 est transformée en une image mosaïque $I_{CFA}^{Z^*(x,y)}(x,y)$ par le capteur d'image 21 et la matrice de filtres colorés 22.

A l'étape suivante E22, l'image mosaïque $I_{CFA}^{Z^*(x,y)}(x,y)$ subit un démosaïçage pour produire Nf images filtrées $SOC_{f_i}^{Z^*(x,y)}$.

L'étape suivante E23 est une estimation spectrale pour déterminer Nλ images spectrales à partir des Nf images filtrées $SOC_{f_i}^{Z^*(x,y)}$.

Dans un mode préféré de réalisation, l'étape E23 d'estimation spectrale et l'étape E3 de déconvolution des images spectrales sont combinées en une unique étape.

Dans ce cas, on considère un domaine de profondeurs de test. Pour une profondeur donnée de test $Z^t$, Nλ images spectrales estimées $EDO\hat{F}_s^{Z^t}(x,y,\lambda)$ sont déterminées.

Cette estimation est réalisée à partir des Nf images filtrées $SOC_{f_i}^{Z^{*(x,y)}}(x,y)$, par exemple après transformée de Fourier de la formule mathématique donnant les images filtrées puis transposition sous forme matricielle linéaire de l'expression obtenue.

Ce mode de réalisation repose sur l'hypothèse d'une scène objet plane, perpendiculaire à l'axe optique du système utilisé, c'est à dire que la profondeur objet est indépendante des coordonnées (x,y).

On obtient ainsi l'écriture matricielle linéaire suivante :

$$G_i^{Z^*} = H_i^{Z^*}.S + N$$

Dans laquelle :

- $G_i^{Z^*}$ est l'écriture matricielle de la transformée de Fourier de l'image filtrée $SOC_{f_i}^{Z^{*(x,y)}}(x,y)$,
- S est l'écriture matricielle de la transformée de Fourier des images spectrales avec extension de profondeur de champ EDOF$_s$ que l'on souhaite estimer,
- $H_i^{Z^*}$ est l'écriture matricielle du produit h$_i$.OTF, avec OTF qui est la transformée de Fourier de la réponse impulsionnelle (PSF) du système optique considéré, dans l'hypothèse d'un objet à une profondeur considérée réelle Z*,
- N est l'écriture matricielle de la transformée de Fourier du bruit additif η.

Une estimation aux moindres carrés de la matrice S est alors donnée par la formule :

$$\hat{S}^{Z^t} = \left( \sum_{i=1}^{N_f} \left| H_i^{Z^t} \right| + C^2 \right)^{-1}.\sum_{j=1}^{N_f} \overline{H}_j^{Z^t}.G_j^{Z^*}$$

Dans laquelle :

- $Z^t$ est une profondeur donnée du domaine de test,
- $\hat{S}^{Z^t}$ est l'écriture matricielle de la transformée de Fourier des images spectrales estimées avec extension de profondeur de champ $EDO\hat{F}_s^{Z^t}(x,y,\lambda)$, dans l'hypothèse de la profondeur Z$^t$ de la scène considérée,
- i est l'indice du filtre h$_i$, et j est l'indice du filtre h$_i$,
- $\overline{H}_i^{Z^t}$ est la matrice conjuguée transposée de $H_i^{Z^t}$,
- C est un paramètre matriciel de régularisation qui permet de converger vers une meilleure estimation des images spectrales EDOF$_s$ considérées.

Les images spectrales estimées avec extension de profondeur de champ $EDO\hat{F}_s^{Z^t}(x,y,\lambda)$ sont ensuite obtenues en effectuant une transformée de Fourier inverse de la matrice $\hat{S}^{Z^t}$.

A l'étape E4, une image mosaïque $I_{CFA}^{Z^t}(x,y)$ est recomposée par le module 26 à partir des images spectrales estimées et pour la profondeur de test Z$^t$, selon la formule :

$$I_{CFA}^{Z^t}(x,y) = \sum_{i=1}^{Nf} m_i(x,y).\int_\lambda h_i(\lambda).TF^{-1}\left\{ \hat{S}^{Z^t}.H_i^{Z^t} \right\}$$

La différence quadratique pixel à pixel entre l'image mosaïque $I^{Z^*(x,y)}_{CFA}(x,y)$ déterminée à l'étape E21 et l'image mosaïque recomposée $I^{Z^t}_{CFA}(x,y)$ est minimisée. En d'autres termes, on recherche par itération la profondeur $Z^t$ en chaque point (x,y) dans le domaine de profondeurs de test, qui minimise un critère de coût $W^{Z^t}(x,y)$, calculé dans le module 26 :

$$W^{Z^t}(x,y) = \left\| I^{Z^*(x,y)}_{CFA}(x,y) - I^{Z^t}_{CFA}(x,y) \right\|^2$$

L'ensemble des valeurs de profondeur estimées à chaque position (x, y) de l'image donne la carte de profondeur estimée $\hat{Z}(x,y)$.

L'étape E5 détermine ensuite les N$\lambda$ images spectrales avec extension de profondeur de champ estimées $\hat{EDOF}^{\hat{Z}(x,y)}_s(x,y,\lambda)$ en ne sélectionnant, par itération sur la profondeur $Z^t$, que les valeurs d'images spectrales avec extension de profondeur de champ estimées $\hat{EDOF}^{Z^t(x,y)}_s(x,y,\lambda)$ pour lesquelles la profondeur $Z^t$ considérée correspond à la carte de profondeur estimée $\hat{Z}(x,y)$.

Dans un autre mode préféré de réalisation, l'étape E22 de démosaïçage, l'étape E23 d'estimation spectrale et l'étape E3 de déconvolution des images spectrales sont combinées en une seule étape.

Ce mode de réalisation est basé sur le fait qu'il est possible de trouver une loi de passage de l'espace d'image mosaïque à un autre espace, ici l'espace des images spectrales avec extension de profondeur de champ, sous la forme d'une écriture matricielle linéaire.

Ce mode de réalisation utilise des images issues d'une base d'images pour calculer (figure 5) une matrice de passage $D^{Z^t}_{EDOF_s}$ entre l'espace de l'image mosaïque et l'espace des images spectrales avec extension de profondeur de champ, pour une profondeur test $Z^t$.

Ce mode de réalisation repose sur l'hypothèse que la scène est un plan dans l'espace objet perpendiculaire à l'axe optique du système.

La matrice de passage $D^{Z^t}_{EDOF_s}$ de l'image mosaïque à l'une des images EDOF$_s$ de l'espace des images spectrales est donnée par la formule :

$$D^{Z^t}_{EDOF_s} = EDOF_s . I^{Z^{t^T}}_{CFA} . \left( I^{Z^t}_{CFA} . I^{Z^{t^T}}_{CFA} + r0.Id \right)^{-1}$$

Dans laquelle :

- Id représente une matrice identité dont la taille est identique à celle de la matrice $I^{Z^t}_{CFA} . I^{Z^{t^T}}_{CFA}$,

- r0 représente un élément scalaire de régularisation de la matrice $D^{Z^t}_{EDOF_s}$ estimée,
- EDOF$_s$ est une matrice contenant les valeurs des images spectrales avec extension de profondeur de champ de la base de données d'images utilisée,

- $I^{Z^t}_{CFA}$ est une matrice contenant les valeurs de l'image mosaïque recomposée $I^{Z^t}_{CFA}(x,y)$ à partir de l'expression mathématique d'une image mosaïque, pour une profondeur test donnée $Z^t$,

- $I^{Z^t \ T}_{CFA}$ est la matrice transposée de la matrice $I^{Z^t}_{CFA}$.

La matrice de passage $D^{Z^t}_{EDOF_s}$ de l'espace image mosaïque à l'espace des images spectrales avec extension de profondeur de champ est donnée par la moyenne des matrices calculées à partir de chacune des images de la base d'images utilisée, pour une profondeur test donnée.

On calcule ainsi plusieurs matrices de passage $D_{EDOF_s}^{Z^t}$ respectivement pour plusieurs profondeurs $Z^t$ du domaine de profondeurs de test.

L'image spectrale estimée avec extension de profondeur de champ pour la profondeur $Z^t$ est obtenue par multiplication matricielle de la matrice $D_{EDOF_s}^{Z^t}$ avec une matrice $I_{CFA}^{Z^*(x,y)}$ formée à partir de l'image mosaïque réelle $I_{CFA}^{Z^*(x,y)}(x,y)$. L'opération matricielle est du type :

$$EDOF_s^{Z^t}(x,y,\lambda) = D_{EDOFs}^{Z^t}.I_{CFA}^{Z^t}$$

Comme dans le premier mode de réalisation, à l'étape E4, une image mosaïque est recomposée dans le module 26 à partir des images spectrales estimées et pour la profondeur de test $Z^t$, selon la formule :

$$I_{CFA}^{Z^t}(x,y) = \sum_{i=1}^{Nf} m_i(x,y).\int_\lambda h_i(\lambda).PSF(x,y,Z^t,\lambda) \otimes_{(x,y)} EDOF_s^{Z^t}(x,y,\lambda)$$

La différence quadratique pixel à pixel entre l'image mosaïque $I_{CFA}^{Z^*(x,y)}(x,y)$ et l'image mosaïque recomposée $I_{CFA}^{Z^t}(x,y)$ est ensuite minimisée, c'est-à-dire que l'on recherche par itération la profondeur dans le domaine de profondeurs de test, qui minimise un critère de coût à chaque position. L'ensemble des valeurs de profondeur estimée pour toutes les positions (x,y) de l'image donne la carte de profondeur estimée $\hat{Z}(x,y)$.

L'étape E5 détermine ensuite les $N\lambda$ images spectrales avec extension de profondeur de champ estimées $\hat{EDOF}_s^{\hat{Z}(x,y)}(x,y,\lambda)$ en ne sélectionnant, par itération sur la profondeur $Z^t$, que les valeurs d'images spectrales avec extension de profondeur de champ estimées $\hat{EDOF}_s^{Z^t}(x,y,\lambda)$ pour lesquelles la profondeur $Z^t$ considérée correspond à la carte de profondeur estimée $\hat{Z}(x,y)$ (module 27).

Art antérieur :

[1]: Article intitulé "Generalized Assorted Pixel Camera: Post-Capture Control of Resolution, Dynamic Range and Spectrum" de Yasuma, F.; Mitsunaga, T.; Iso, D. & Nayar, S. K. (2010), dans IEEE Transactions on Image Processing ;

[2]: Article intitulé "Extended depth-of-field using sharpness transport across color channels" de Guichard, F.; Nguyen, H.-P.; Tessieres, R.; Pyanet, M.; Tarchouna, I. & Cao, F. (2009), dans 'Proceedings of the SPIE - The International Society for Optical Engineering' ;

[3]: Brevet US 7,626,769, "Extended Depth Of Field Imaging System using Chromatic Aberration", 2009, Datalogic Scanning ;

[4]: Brevet WO 2009/019362 "Optical System Furnished With a Device For Increasing its Depth Of Field", DxO Labs ;

[5]: Article intitulé "Coded Aperture Pairs for Depth from Defocus and Defocus Deblurring" de Zhou, C.; Lin, S. & Nayar, S. (2011), dans International Journal on Computer Vision ;

[6]: Article intitulé "Statistics of spatial coneexcitation ratios in natural scenes" de Nascimento, S.M.C., Ferreira, F., and Foster, D.H. (2002), dans Journal of the Optical Society of America A, 19,1484-1490 ;

[7]: Article intitulé "Color filters including infrared cut-off integrated on CMOS image sensor" de Frey, L.; Parrein, P.; Raby, J.; Pellé, C.; Hérault, D.; Marty, M. & Michailos, J. (2011),, Opt. Express 19(14), 13073--13080.

**EP 3 072 081 B1**

**Revendications**

1. Procédé d'estimation de la carte de profondeur image d'une scène, **caractérisé en ce qu'**il comporte les étapes de :

   - fourniture (E1) d'une image dont la focalisation dépend de la profondeur et de la longueur d'onde des points objets considérés de la scène, par un système optique chromatique longitudinal,
   - détermination (E2) d'un ensemble d'images spectrales à partir de l'image fournie par le système optique chromatique longitudinal, l'étape de détermination d'un ensemble d'images spectrales comportant les étapes de :

      ◦ réception (E21) de l'image formée par le système optique chromatique longitudinal et formation d'une image mosaïque, par un capteur d'images équipé d'une pluralité de filtres spectraux,
      ◦ démosaïçage (E22) de l'image mosaïque pour fournir un ensemble d'images filtrées,
      ◦ estimation spectrale (E23) pour recevoir l'ensemble d'images filtrées et fournir l'ensemble d'images spectrales

   - déconvolution (E3) des images spectrales pour fournir des images spectrales estimées avec extension de profondeur de champ, et
   - analyse (E4) d'un critère de coût dépendant des images spectrales estimées avec extension de profondeur de champ pour fournir une carte de profondeur estimée ($\hat{Z}(x,y)$).

2. Procédé selon la revendication 1, **caractérisé en ce que** l'étape (E4) d'analyse d'un critère de coût comporte :

   - la formation d'une image mosaïque recomposée à partir des images spectrales estimées avec extension de profondeur de champ de la scène,
   - l'estimation de la profondeur en chaque point de l'image en minimisant un critère de coût dépendant d'une différence quadratique point à point entre l'image mosaïque formée et l'image mosaïque recomposée à partir d'images spectrales estimées avec extension de profondeur de champ de la scène, pour des profondeurs d'un domaine prédéterminé de profondeurs.

3. Procédé selon la revendications 1 ou 2, **caractérisé en ce qu'**il comporte en outre une étape d'estimation (E5) d'un ensemble d'images spectrales avec extension de profondeur de champ de la scène pour la carte de profondeur estimée fournie à l'étape d'analyse.

4. Procédé selon la revendication 3, **caractérisé en ce que** l'estimation de l'ensemble d'images spectrales avec extension de profondeur de champ de la scène comporte la sélection, par itération sur la profondeur, de valeurs d'images spectrales avec extension de profondeur de champ fournies à l'étape de déconvolution pour lesquelles la profondeur considérée correspond à la carte de profondeur estimée fournie à l'étape d'analyse.

5. Procédé selon l'une quelconque des revendications 1 à 4, **caractérisé en ce que** l'étape d'estimation spectrale (E23) et l'étape de déconvolution (E3) des images spectrales sont combinées en une seule étape.

6. Procédé selon l'une quelconque des revendication 1 à 4, **caractérisé en ce que** l'étape de démosaïçage (E22), l'étape d'estimation spectrale (E23) et l'étape de déconvolution (E3) des images spectrales sont combinées en une seule étape et **en ce que** cette étape utilise des images issues d'une base de données d'images pour calculer une matrice de passage entre l'espace de l'image mosaïque et l'espace des images spectrales.

7. Dispositif d'estimation de la carte de profondeur image d'une scène, **caractérisé en ce qu'**il comporte :

   - Un système optique chromatique longitudinal (1) pour fournir une image dont la focalisation dépend de la profondeur et de la longueur d'onde des points objets considérés de la scène,
   - Un capteur d'images spectrales (2) pour recevoir l'image fournie par le système optique chromatique longitudinal et pour fournir un ensemble d'images spectrales, le capteur d'images spectrales (2) comportant :

      ◦ Un capteur d'images (21) équipé d'une pluralité de filtres spectraux (22), pour recevoir l'image fournie par le système optique chromatique longitudinal et pour fournir une image mosaïque,
      ◦ Un module de démosaïçage (23) pour recevoir l'image mosaïque et pour fournir un ensemble d'images filtrées,

◦ Un module d'estimation spectrale (24) pour recevoir l'ensemble d'images filtrées et pour fournir l'ensemble d'images spectrales

- Un module (25) de déconvolution des images spectrales pour fournir des images spectrales estimées avec extension de profondeur de champ, et
- Un module (26) d'analyse d'un critère de coût dépendant des images spectrales estimées avec extension de profondeur de champ pour fournir une carte de profondeur estimée ($\hat{Z}(x,y)$).

8. Dispositif selon la revendication 7, **caractérisé en ce que** le module (26) d'analyse d'un critère de coût comporte :

- Des moyens de formation d'une image mosaïque recomposée à partir des images spectrales estimées avec extension de profondeur de champ de la scène,
- Des moyens d'estimation de la profondeur en chaque point de l'image adaptés à minimiser un critère de coût dépendant d'une différence quadratique point à point entre l'image mosaïque formée et l'image mosaïque recomposée à partir d'images spectrales estimées avec extension de profondeur de champ de la scène, pour des profondeurs d'un domaine prédéterminé de profondeurs.

9. Dispositif selon la revendications 7 ou 8, **caractérisé en ce qu'**il comporte en outre un module (27) d'estimation d'un ensemble d'images spectrales avec extension de profondeur de champ de la scène pour la carte de profondeur estimée fournie par le module d'analyse.

10. Dispositif selon la revendication 9, **caractérisé en ce que** le module (27) d'estimation de l'ensemble d'images spectrales avec extension de profondeur de champ de la scène est adapté pour sélectionner, par itération sur la profondeur, des valeurs d'images spectrales avec extension de profondeur de champ fournies le module de déconvolution pour lesquelles la profondeur considérée correspond à la carte de profondeur estimée fournie par le module d'analyse.

11. Dispositif selon l'une quelconque des revendications 7 à 10, **caractérisé en ce que** le module d'estimation spectrale (24) et le module de déconvolution (25) des images spectrales sont combinés en un seul module.

12. Dispositif selon l'une quelconque des revendications 7 à 10, **caractérisé en ce que** le module de démosaïçage (23), le module d'estimation spectrale (24) et le module de déconvolution 25) des images spectrales sont combinés en un seul module qui est adapté à utiliser des images issues d'une base d'images pour calculer une matrice de passage entre l'espace de l'image mosaïque et l'espace des images spectrales.

13. Programme d'ordinateur comportant des instructions pour l'exécution des étapes du procédé selon l'une quelconque des revendications 1 à 6 lorsque ledit programme est exécuté par un ordinateur.

14. Support d'enregistrement lisible par un ordinateur sur lequel est enregistré un programme d'ordinateur comprenant des instructions pour l'exécution des étapes du procédé selon l'une quelconque des revendications 1 6.


**Patentansprüche**

1. Verfahren zur Schätzung der Bildtiefenkarte einer Szene, **dadurch gekennzeichnet, dass** es folgende Schritte umfasst:

- Bereitstellung (E1) eines Bildes, dessen Fokussierung von der Tiefe und der Wellenlänge der betroffenen Objektpunkte der Szene abhängt, durch ein optisches, in Längsrichtung aufgespannte Farbsystem,
- Erfassung (E2) eines Satzes von Spektralbildern anhand des durch das optische, in Längsrichtung aufgespannte Farbsystem bereitgestellten Bildes, wobei der Schritt zur Erfassung eines Satzes von Spektralbildern folgende Schritte umfasst:

◦ Empfang (E21) des durch das optische, in Längsrichtung aufgespannte Farbsystem erstellten Bildes und Erstellung eines Mosaikbildes durch einen mit einer Vielzahl von Spektralfiltern ausgestatteten Bildsensor,
◦ Entmosaikierung (E22) des Mosaikbildes zur Bereitstellung eines Satzes von gefilterten Bildern,
◦ Spektralschätzung (E23) zum Empfang des Satzes von gefilterten Bildern und zur Bereitstellung des Satzes von Spektralbildern

- Dekonvolution (E3) der Spektralbilder zur Bereitstellung von mit Erweiterung der Tiefenschärfe geschätzten Spektralbildern und
- Analyse (E4) eines Kostenkriteriums in Abhängigkeit von den mit Erweiterung der Tiefenschärfe geschätzten Spektralbildern zur Bereitstellung einer ($\hat{Z}(x,y)$). geschätzten Tiefenkarte.

**2.** Verfahren nach Anspruch 1, **dadurch gekennzeichnet, dass** der Schritt (E4) zur Analyse eines Kostenkriteriums umfasst:

- die Erstellung eines Mosaikbildes, das anhand der mit Erweiterung der Tiefenschärfe der Szene geschätzten Bilder zusammengesetzt wird,
- die Tiefenschätzung an jedem Punkt des Bildes durch Minimierung, bei Tiefen eines vorbestimmten Tiefenbereichs, eines von einer Quadratdifferenz abhängigen Kostenkriteriums Punkt um Punkt zwischen dem erstellten Mosaikbild und dem Mosaikbild, das anhand von mit Erweiterung der Tiefenschärfe der Szene geschätzten Spektralbildern zusammengesetzt wird.

**3.** Verfahren nach Anspruch 1 oder 2, **dadurch gekennzeichnet, dass** es außerdem einen Schritt zur Schätzung (E5) eines Satzes von Spektralbildern mit Erweiterung der Tiefenschärfe der Szene für die geschätzte, bei dem Analyseschritt bereitgestellte Tiefenkarte.

**4.** Verfahren nach Anspruch 3, **dadurch gekennzeichnet, dass** die Schätzung des Satzes von Spektralbildern mit Erweiterung der Tiefenschärfe der Szene die durch Iteration auf der Tiefe getroffene Auswahl von Werten von Spektralbildern mit Erweiterung der Tiefenschärfe umfasst, welche bei dem Schritt zur Dekonvolution bereitgestellt werden und bei welchen die betroffene Tiefe der geschätzten, bei dem Analyseschritt bereitgestellten Tiefenkarte entspricht.

**5.** Verfahren nach einem der vorhergehenden Ansprüche 1 bis 4, **dadurch gekennzeichnet, dass** der Schritt zur Spektralschätzung (E23) und der Schritt zur Dekonvolution (E3) der Spektralbilder in einem einzigen Schritt zusammengefasst werden.

**6.** Verfahren nach einem der vorhergehenden Ansprüche 1 bis 4, **dadurch gekennzeichnet, dass** der Schritt zur Entmosaikierung (E22), der Schritt zur Spektralschätzung (E23) und der Schritt zur Dekonvolution (E3) der Spektralbilder in einem einzigen Schritt zusammengefasst werden, und dass dieser Schritt Bilder verwendet, die aus einer Bilddatenbank stammen, um eine Matrix für den Übergang von dem Raum des Mosaikbildes in den Raum der Spektralbilder zu berechnen.

**7.** 1 Vorrichtung zur Schätzung der Bildtiefenkarte einer Szene, **dadurch gekennzeichnet, dass** sie folgende Schritte umfasst:

- ein optisches, in Längsrichtung aufgespanntes Farbsystem (1) zur Bereitstellung eines Bildes, dessen Fokussierung von der Tiefe und der Wellenlänge der betroffenen Objektpunkte der Szene abhängt,
- einen Sensor für Spektralbilder (2) zum Empfang des Bildes, das durch das optische, in Längsrichtung aufgespannte Farbsystem bereitgestellt wird, und zur Bereitstellung eines Satzes von Spektralbildern, wobei der Sensor für Spektralbilder (2) umfasst:

  ◦ einen Bildsensor (21), ausgestattet mit einer Vielzahl von Spektralfiltern (22), zum Empfang des durch das optische, in Längsrichtung aufgespannte Farbsystem bereitgestellten Bildes und zur Bereitstellung eines Mosaikbildes,
  ◦ ein Entmosaikierungsmodul (23) zum Empfang des Mosaikbildes und zur Bereitstellung eines Satzes von gefilterten Bildern,
  ◦ ein Spektralschätzungsmodul (24) zum Empfang des Satzes von gefilterten Bildern und zur Bereitstellung des Satzes von Spektralbildern

- ein Modul (25) für die Dekonvolution der Spektralbilder zur Bereitstellung von mit Erweiterung der Tiefenschärfe geschätzten Spektralbildern und
- ein Modul (26) für die Analyse eines Kostenkriteriums, das von den mit Erweiterung der Tiefenschärfe geschätzten Spektralbildern abhängt, zur Bereitstellung einer $\hat{Z}(x,y)$ geschätzten Tiefenkarte.

**8.** Vorrichtung nach Anspruch 7, **dadurch gekennzeichnet, dass** das Modul (26) für die Analyse eines Kostenkriteriums umfasst:

- Mittel zur Erstellung eines Mosaikbildes, das anhand der mit Erweiterung der Tiefenschärfe der Szene geschätzten Spektralbilder zusammengesetzt wird,
- Mittel zur Tiefenschätzung an jedem Punkt des Bildes, geeignet zur Minimierung eines von einer Quadratdifferenz abhängigen Kostenkriteriums Punkt um Punkt zwischen dem erstellten Mosaikbild und dem Mosaikbild, das anhand von mit Erweiterung der Tiefenschärfe der Szene geschätzten Spektralbildern bei Tiefen eines vorbestimmten Tiefenbereichs zusammengesetzt wird.

9. Vorrichtung nach Anspruch 7 oder 8, **dadurch gekennzeichnet, dass** es außerdem ein Modul (27) für die Schätzung eines Satzes von Spektralbildern mit Erweiterung der Tiefenschärfe der Szene für die geschätzte, durch das Analysemodul bereitgestellte Tiefenkarte.

10. Vorrichtung nach Anspruch 9, **dadurch gekennzeichnet, dass** das Modul (27) zur Schätzung des Satzes von Spektralbildern mit Erweiterung der Tiefenschärfe der Szene dazu geeignet ist, durch Iteration auf der Tiefe Werte von Spektralbildern mit Erweiterung der Tiefenschärfe auszuwählen, welche durch das Modul zur Dekonvolution bereitgestellt werden und bei welchen die betroffene Tiefe der geschätzten, durch das Analysemodul bereitgestellten Tiefenkarte entspricht.

11. Vorrichtung nach einem der Ansprüche 7 bis 10, **dadurch gekennzeichnet, dass** das Modul zur Spektralschätzung (24) und das Modul zur Dekonvolution (25) der Spektralbilder in einem einzigen Modul zusammengefasst werden.

12. Vorrichtung nach einem der Ansprüche 7 bis 10, **dadurch gekennzeichnet, dass** das Modul zur Entmosaikierung (23), das Modul zur Spektralschätzung (24) und das Modul zur Dekonvolution (25) der Spektralbilder in einem einzigen Modul zusammengefasst werden, das zur Verwendung von aus einer Bilddatenbank stammenden Bildern geeignet ist, um eine Matrix für den Übergang von dem Raum des Mosaikbildes in den Raum der Spektralbilder zu berechnen.

13. Computerprogramm mit Anweisungen zur Ausführung der Verfahrensschritte nach einem der Ansprüche 1 bis 6, wenn das Programm durch einen Computer ausgeführt wird.

14. Speichermedium, das durch einen Computer lesbar ist, auf welchem ein Computerprogramm mit Anweisungen zur Ausführung der Verfahrensschritte nach einem der Ansprüche 1 bis 6 gespeichert ist.

## Claims

1. Method for estimating the image depth map of a scene, **characterized in that** it comprises the steps of:

- providing (E1) an image the focus of which depends on the depth and wavelength of the considered object points of the scene, using a longitudinal chromatic optical system,
- determining (E2) a set of spectral images from the image provided by the longitudinal chromatic optical system, the step of determining a set of spectral images comprising the steps of:

  ◦ receiving (E21) the image formed by the longitudinal chromatic optical system and forming a mosaic image, using an image sensor equipped with a plurality of spectral filters,
  ◦ demosaicing (E22) the mosaic image in order to provide a set of filtered images,
  ◦ carrying out spectral estimation (E23) in order to receive the set of filtered images and provide the set of spectral images

- deconvoluting (E3) the spectral images in order to provide estimated spectral images with extension of the depth of field, and
- analyzing (E4) a cost criterion that is dependent on the estimated spectral images with extension of the depth of field in order to provide an estimated depth map ($\hat{Z}(x,y)$).

2. Method according to claim 1, **characterized in that** step (E4) of analyzing a cost criterion comprises:

- forming a mosaic image reconstructed from the estimated spectral images with extension of the depth of field of the scene,

- estimating the depth at each point of the image by minimizing a cost criterion dependent on a point-to-point quadratic difference between the mosaic image formed and the mosaic image reconstructed from estimated spectral images with extension of the depth of field of the scene, for depths of a predetermined depth domain.

3. Method according to claim 1 or 2, **characterized in that** it comprises moreover a step of estimating (E5) a set of spectral images with extension of the depth of field of the scene for the estimated depth map provided in the analysis step.

4. Method according to claim 3, **characterized in that** estimating the set of spectral images with extension of the depth of field of the scene comprises selecting, by iteration on the depth, values of spectral images with extension of the depth of field provided by the deconvolution step for which the considered depth corresponds to the estimated depth map provided in the analysis step.

5. Method according to any one of claims 1 to 4, **characterized in that** the spectral estimation step (E23) and the deconvolution step (E3) of the spectral images are combined into a single step.

6. Method according to any one of claims 1 to 4, **characterized in that** the demosaicing step (E22), the spectral estimation step (E23) and the deconvolution step (E3) of the spectral images are combined into a single step and **in that** this step uses images originating from a database of images to calculate a transition matrix between the space of the mosaic image and the space of the spectral images.

7. Device for the estimating the image depth map of a scene, **characterized in that** it comprises:

- A longitudinal chromatic optical system (1) for providing an image the focus of which depends on the depth and wavelength of the considered object points of the scene,
- A spectral image sensor (2) for receiving the image provided by the longitudinal chromatic optical system and for providing a set of spectral images, the spectral image sensor (2) comprising:

  ◦ An image sensor (21) equipped with a plurality of spectral filters (22) for receiving the image provided by the longitudinal chromatic optical system and for providing a mosaic image,
  ◦ A demosaicing module (23) for receiving the mosaic image and for providing a set of filtered images,
  ◦ A spectral estimation module (24) for receiving the set of filtered images and for providing the set of spectral images

- A module (25) for deconvoluting the spectral images in order to provide estimated spectral images with extension of the depth of field, and
- A module (26) for analyzing a cost criterion that is dependent on the estimated spectral images with extension of the depth of field, in order to provide an estimated depth map ($\hat{Z}(x,y)$).

8. Device according to claim 7, **characterized in that** the module (26) for analyzing a cost criterion comprises:

- Means for forming a mosaic image reconstructed from the estimated spectral images with extension of the depth of field of the scene,
- Means for estimating the depth at each point in the image, which is adapted to minimize a cost criterion that is dependent on a point-to-point quadratic difference between the mosaic image formed and the mosaic image reconstructed from estimated spectral images with extension of the depth of field of the scene, for depths in a predetermined depth domain.

9. Device according to claim 7 or 8, **characterized in that** it comprises moreover a module (27) for estimating a set of spectral images with extension of the depth of field of the scene, for the estimated depth map provided by the analysis module.

10. Device according to claim 9, **characterized in that** the module (27) for estimating the set of spectral images with extension of the depth of field of the scene is adapted to select, by iterating over the depth, values of spectral images with extension of the depth of field provided by the deconvolution module for which the considered depth corresponds to the estimated depth map provided by the analysis module.

**11.** Device according to any one of claims 7 to 10, **characterized in that** the spectral estimation module (24) and the spectral image deconvolution module (25) are combined into a single module.

**12.** Device according to any one of claims 7 to 10, **characterized in that** the demosaicing module (23), the spectral estimation module (24), and the spectral image deconvolution module (25) are combined into a single module which is adapted to use images originating from a database of images to calculate a transfer matrix between the space of the mosaic image and the space of the spectral images.

**13.** Computer program comprising instructions for executing the steps of the method according to any one of claims 1 to 6 when said program is executed by a computer.

**14.** Computer-readable storage medium on which a computer program is stored comprising instructions for executing the steps of the method according to any one of claims 1 to 6.

FIG. 1

E1

E2

E3

E4

E5

# FIG. 2

E21

E22

E23

# FIG. 3

BD

$D_M$

$M_{23}$

# FIG. 4

$BD_1$

$D\,Z^t_{EDOF_s}$

$M_1$

# FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009019362 A

- US 7626769 B

**Littérature non-brevet citée dans la description**

- **ZHOU ; LIN ; NAYAR.** Coded aperture pairs for depth from defocus and defocus deblurring. *International Journal on Computer Vision,* 2011
- **PAULINE.** Conception conjointe optique/traitement pour un imageur compact à capacité 3D. *La thèse*
- **YASUMA, F. ; MITSUNAGA, T. ; ISO, D. ; NAYAR, S. K.** Generalized Assorted Pixel Camera: Post-Capture Control of Resolution, Dynamic Range and Spectrum. *IEEE Transactions on Image Processing,* 2010
- **GUICHARD, F. ; NGUYEN, H.-P. ; TESSIERES, R. ; PYANET, M. ; TARCHOUNA, I. ; CAO, F.** Extended depth-of-field using sharpness transport across color channels. *Proceedings of the SPIE - The International Society for Optical Engineering,* 2009

- **ZHOU, C. ; LIN, S. ; NAYAR, S.** Coded Aperture Pairs for Depth from Defocus and Defocus Deblurring. *International Journal on Computer Vision,* 2011
- **NASCIMENTO, S.M.C. ; FERREIRA, F. ; FOSTER, D.H.** Statistics of spatial coneexcitation ratios in natural scenes. *Journal of the Optical Society of America A,* 2002, vol. 19, 1484-1490
- **FREY, L. ; PARREIN, P. ; RABY, J. ; PELLÉ, C. ; HÉRAULT, D. ; MARTY, M. ; MICHAILOS, J.** Color filters including infrared cut-off integrated on CMOS image sensor. *Opt. Express,* 2011, vol. 19 (14), 13073-13080